# EUROPÄISCHE PATENTANMELDUNG

(11) **EP 1 304 154 A1**
(43) Veröffentlichungstag der Anmeldung: **23.04.2003**
(21) Anmeldenummer: 02019421.3
(22) Anmeldetag: 30.08.2002
(51) Int. Cl.: B01D 53/00

(54) **Verfahren und Vorrichtung zur Reinigung von Abluft**

(30) Priorität: 27.09.2001 DE 10147703
(71) Anmelder: Markert, Jürgen, 71254 Ditzingen (DE)
(72) Erfinder: Markert, Jürgen, 71254 Ditzingen (DE)
(74) Vertreter: Späth, Dieter, Dipl.-Ing.

(57) **Zusammenfassung**

Die Erfindung betrifft ein Verfahren und eine Vorrichtung (10) zur Reinigung von Abluft aus Industriebetrieben, wobei die Abluft beispielsweise flüchtige organische Verbindungen mit einem Anteil von ca. 200 ppm als Schadstoffe enthält. Die Erfindung schlägt vor, außerhalb eines Reaktionsraums (12), durch den die Abluft durchgeleitet wird, mit einem Ozonerzeuger (14) Ozon zu erzeugen und dem Reaktionsraum (12) zuzuführen. Das Ozon reagiert mit den in der Abluft enthaltenen flüchtigen organischen Verbindungen und baut diese zu Kohlendioxid und Wasser ab. Die Effektivität der Reinigung wird durch UV-Licht (UV-Lampen 16) und eine Feuchtigkeitssättigung der Abluft mit einem Wäscher (22) gesteigert. Zum Abbau überschüssigen Ozons kann in einem Auslass (26) ein Ozonfilter (28) angeordnet sein.

## Beschreibung

Die Erfindung betrifft ein Verfahren und eine Vorrichtung zur Reinigung von Abluft mit den Merkmalen der Oberbegriffe der Ansprüche 1 oder 4.

Die Erfindung ist auf die Reinigung von Abluft gerichtet, die eine geringe Schadstoffmenge, insbesondere flüchtige organische Verbindungen wie Kohlenwasserstoffe mit einem Anteil von beispielsweise etwa einigen 10 bis einigen 100 ppm (parts per million) enthält, also zum ganz überwiegenden Teil aus Sauerstoff (ca. 20 %) und Stickstoff (ca. 80 %) besteht. Solche Abluft entsteht beispielsweise in chemischen Fabriken, Lackieranlagen oder Tierverwertungsanstalten. Durch die erfindungsgemäße Reinigung von Abluft soll eine Geruchsbelästigung verhindert oder gemindert und es sollen umweltrelevante Stoffe abgebaut werden. Dabei ist die Erfindung nicht auf die Reinigung von Abluft von den genannten Schadstoffen oder auf die genannte Schadstoffkonzentration beschränkt.

In der DE 195 46 061 A1 ist ein Verfahren zur Reinigung von Abluft beschrieben. Dort wird in einem ersten Abschnitt die Abluft mittels Coronaentladungen ionisiert und in einem zweiten Abschnitt an einem Katalysator oxidiert. Es handelt sich also um einen Reaktor, dem ein Katalysator nachgeschaltet ist. Im Reaktor wird die Abluft einem elektrischen Feld ausgesetzt und dadurch die Abluftmoleküle aktiviert und teilweise auch zersetzt. Im anschließenden Katalysator werden flüchtige organische Verbindungen zu Kohlendioxid und Wasser oxidiert. Für den Reaktor sind auch die Bezeichnungen nicht-thermischer Reaktor, Plasmareaktor oder Barrierereaktor gebräuchlich. Das im Reaktor erzeugte elektrische Feld wird auch als nicht-thermisches Plasma oder elektrisch behinderte Entladung bezeichnet. Diesem und anderen bekannten Verfahren zur Reinigung von Abluft ist gemeinsam, dass eine vergleichsweise große elektrische Energie zur Reinigung aufgebracht werden muss.

Der Erfindung liegt die Aufgabe zugrunde, ein Verfahren und eine Vorrichtung zur Reinigung von Abluft mit einem niedrigen Energieverbrauch vorzuschlagen.

Diese Aufgabe wird erfindungsgemäß durch die Merkmale der Ansprüche 1 und 4 gelöst. Die Erfindung sieht vor, Ozon außerhalb eines Reaktionsraums zu erzeugen und auf vorzugsweise möglichst kurzem Weg und in möglichst kurzer Zeit einem Reaktionsraum zuzuführen, durch den die zu reinigende Abluft durchgeleitet wird. Das Ozon lässt sich beispielsweise mit einem Reaktor der eingangs zur Abluftreinigung erläuterten Art erzeugen, dem Luft (Umgebungsluft), idealerweise trockene Luft oder Sauerstoff anstatt Abluft zugeführt wird. Der Reaktor kann allgemein auch als Ozonerzeuger bezeichnet werden. Erfindungsgemäß wird nicht die Abluft durch den Reaktor durchgeleitet, sondern nicht zu reinigende, idealerweise trockene Luft oder Sauerstoff. Es wird nicht die Abluft dem elektrischen Feld (nicht-thermischen Plasma) ausgesetzt, in der die flüchtigen organischen Verbindungen, zu deren Zersetzung und Abbau der Energieeintrag mit dem elektrischen Feld an sich erfolgt, nur zu einem geringen Teil enthalten sind. Die unmittelbare Zersetzung von organischen Verbindungen ist bei diesem Verfahren sehr gering, da diese Verbindungen nur einen vergleichsweise kleinen Anteil der Abluftzusammensetzung ausmachen. Die Effizienz der Ozonerzeugung ist daher je nach Zusammensetzung des Abluftvolumenstromes, insbesondere dessen Feuchtigkeit, in Bezug auf die eingesetzte elektrische Energie stark herabgesetzt. Ein großer Teil der eingebrachten Energie wird nutzlos aufgebracht. Im Unterschied dazu wird beim erfindungsgemäßen Verfahren die Energie zur Erzeugung von Ozon aus (trockener) Luft oder (trockenem) Sauerstoff aufgewandt. Hierdurch ist der Energieeintrag erheblich effektiver. Zudem ist die Luftmenge üblicherweise erheblich geringer als die Abluftmenge, da dem Reaktor nur so viel Luft zugeführt wird, dass die erzeugte Ozonmenge zum Abbau der Schadstoffe in der Abluft ausreicht. Das erzeugte Ozon wird der Abluft zugeführt und initiiert die Oxidation der in der Abluft enthaltenen flüchtigen organischen Verbindungen zu Kohlendioxid und Wasser.

Die zur Ozonerzeugung erforderliche Energie ist erheblich geringer als die zur Erzeugung eines elektrischen Feldes zur Abluftreinigung erforderliche Energie. Auch die im Verhältnis zur Abluftmenge kleine Ozonmenge trägt zu einem niedrigen Energieverbrauch bei. Auf Grund der kleinen Ozonmenge ist ein kleiner Ozonerzeuger ausreichend. Ein kleiner Ozonerzeuger hat zudem erhebliche Kostenvorteile im Vergleich zu einem für die gesamte Abluftmenge dimensionierten Reaktor.

Die Abluft und/oder das zugeführte Ozon werden UV-Licht ausgesetzt. Das UV-Licht trägt Energie in die Abluft ein, regt die in der Abluft enthaltenen Moleküle an und steigert dadurch das Reaktionsvermögen. Des weiteren zersetzt UV-Licht das eingebrachte Ozon in Sauerstoffmoleküle und Sauerstoffatome, wobei die Sauerstoffatome Hydroxy-Radikale bildet, die in der Abluft enthaltene flüchtige organische Verbindungen zersetzen und zu Kohlendioxid und Wasser oxidieren. Die Schadstoffe werden abgebaut. Das UV-Licht erhöht die Effektivität der Abluftreinigung.

Des weiteren sieht die Erfindung eine Befeuchtung der Abluft vor. Eine hohe Feuchtigkeit der Abluft verbessert das Reaktionsvermögen und erhöht dadurch die Effektivität der Abluftreinigung. Eine nach Möglichkeit mit Feuchtigkeit gesättigte Abluft ist anzustreben. Zur Befeuchtung kann beispielsweise ein sog. Wäscher im Abluftstrom angeordnet sein. Ist die zu reinigende Abluft von vornherein mit Feuchtigkeit gesättigt oder weist jedenfalls eine hohe Feuchtigkeit auf, kann eine zusätzliche Befeuchtung entfallen.

Eine weitere Ausgestaltung der Erfindung sieht vor, der Abluft Stickoxide zuzuführen, die katalytisch oder oxidierend wirken können und die Effektivität der Reinigung erhöhen. Die Stickoxide können zugeführt oder beispielsweise durch Lichtbogenentladung erzeugt werden.

Vorzugsweise wird überschüssiges Ozon nach der Reinigung der Abluft abgebaut. Dies kann beispielsweise mittels eines Ozonfilters oder Katalysators erfolgen.

Die Erfindung wird nachfolgend anhand eines in der Zeichnung dargestellten Ausführungsbeispiels näher erläutert. Die einzige Figur zeigt eine vereinfachte Schemadarstellung einer erfindungsgemäßen Vorrichtung.

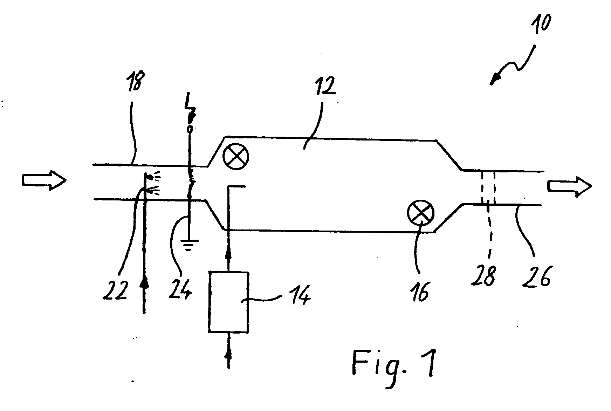

Die in Figur 1 dargestellte, insgesamt mit 10 bezeichnete, erfindungsgemäße Vorrichtung ist zur Reinigung von Abluft vorgesehen. Sie weist einen Reaktionsraum 12 auf, durch den Abluft beispielsweise aus einem Industriebetrieb durchgeleitet wird. Die Durchströmungsrichtung der Abluft ist mit Pfeilen dargestellt, die Durchströmung erfolgt in der Zeichnung von links nach rechts. Zu Erläuterungszwecken sei angenommen, dass die zu reinigende Abluft Luft ist, die flüchtige organische Verbindungen mit einem Anteil von einigen 10 bis einigen 100 ppm (parts per million), beispielsweise ca. 200 ppm als Schadstoffe enthält.

Die Vorrichtung 10 umfasst einen Ozonerzeuger (Ozongenerator) 14, durch den Sauerstoff aus einem nicht dargestellten Sauerstoffgenerator geleitet wird. Anstatt Sauerstoff kann Luft, beispielsweise Umgebungsluft durch den Ozonerzeuger 14 geleitet werden. Umgebungsluft wird vor dem Durchleiten durch den Ozonerzeuger 14 getrocknet oder es wird trockene Luft oder trockener Sauerstoff durch den Ozonerzeuger 14 geleitet. Die Verwendung von Umgebungsluft hat den Vorteil, dass kein Sauerstoffgenerator notwendig ist. Dafür ist die Ozonerzeugung aus Luft Energieintensiver. Es wird nicht die zu reinigende Abluft durch den Ozonerzeuger 14 geleitet. Der Ozonerzeuger 14 kann beispielsweise ein an sich bekannter, sog. Barrierereaktor sein, für den beispielsweise auch die Bezeichnung nicht-thermischer Plasmareaktor gebräuchlich ist. Der Ozonerzeuger 14 erzeugt Ozon aus dem in der Luft enthaltenen Sauerstoff. Die das Ozon enthaltende Luft wird aus dem Ozonerzeuger 14 in den Reaktionsraum 12 eingeleitet. Damit möglichst wenig Ozon zerfällt bevor das Ozon in den Reaktionsraum 12 gelangt, ist der Ozonerzeuger 14 dicht bei oder am Reaktionsraum 12 angeordnet, so dass das Ozon auf kurzem Weg und in kurzer Zeit aus dem Ozonerzeuger 14 in den Reaktionsraum 12 gelangt.

Das Ozon reagiert über eine Reaktionskette im Reaktionsraum 12 mit den in der Abluft enthaltenen flüchtigen organischen Verbindungen und wandelt diese in Kohlendioxid und Wasser um.

Die Effektivität der Reinigung wird durch UV-Licht verbessert, weswegen im Reaktionsraum 12 UV-Lichtquellen 16 angeordnet sind. Die Wirkung des UV-Lichts dürfte darin zu sehen sein, dass es das eingeleitete Ozon in atomaren und molekularen Sauerstoff spaltet, wobei der atomare Sauerstoff Hydroxy-Radikale bildet, die einen Abbau der in der Abluft enthaltenen flüchtigen organischen Verbindungen initiieren. Das zur Bildung der Hydroxy-Radikale notwendige Wasser ist im Abluftvolumenstrom enthalten.

In einem Zulauf 18 zum Reaktionsraum 12 sind ein Wäscher 22 als Abluftbefeuchter und Elektroden für eine elektrische Entladung angeordnet. Die Zufuhr von Feuchtigkeit verbessert das Reaktionsvermögen der in der Abluft enthaltenen Teilchen. Die elektrische Entladung an den Elektroden 24 erzeugt Stickoxide in der Abluft, die katalytisch oder oxidativ wirken und den Abbau der flüchtigen organischen Verbindungen und damit die Reinigung der Abluft verbessern. Da Stickoxide selbst Schadstoffe sind, sollte deren Erzeugung und Einbringung in die Abluft begrenzt sein. Es sind gesetzliche Grenzwerte zu beachten.

In einem Auslass 26 des Reaktionsraums 12 ist ein Ozonfilter 28 angeordnet, das überschüssiges Ozon abbaut. Es kann sich insbesondere um einen Katalysator handeln. Außerdem kann im Auslass 26 ein Katalysator oder Filter für die Stickoxide vorgesehen sein, der überschüssige Stickoxide abbaut. Für den Abbau des Ozons und der Stickoxide können zwei separate Filter/Katalysatoren hintereinander oder ein gemeinsames Filter/Katalysator vorgesehen sein.

## Patentansprüche

1. Verfahren zur Reinigung von Abluft, wobei die Abluft durch einen Reaktionsraum geleitet wird, **dadurch gekennzeichnet, dass** außerhalb des Reaktionsraums (12) Ozon erzeugt und zur Abluft in den Reaktionsraum (12) eingeleitet wird, dass die Abluft im Reaktionsraum (12) einer UV-Strahlung ausgesetzt wird, und dass Feuchtigkeit in den Reaktionsraum (12) eingebracht wird.

2. Verfahren nach Anspruch 1, **dadurch gekennzeichnet, dass** Stickoxide in den Reaktionsraum (12) eingebracht oder im Reaktionsraum (12) erzeugt werden.

3. Verfahren nach Anspruch 1 oder 2, **dadurch gekennzeichnet, dass** überschüssiges Ozon nach Reinigung der Abluft abgebaut wird.

4. Vorrichtung zur Reinigung von Abluft, mit einem Reaktionsraum (12) zum Durchleiten der Abluft, **dadurch gekennzeichnet, dass** die Vorrichtung (10) einen Ozonerzeuger (14) aufweist, an den der Reaktionsraum (12) angeschlossen ist, dass die Vorrichtung (10) eine UV-Lichtquelle (16) aufweist, deren Licht in den Reaktionsraum (12) strahlt, und dass die Vorrichtung (10) einen Abluftbefeuchter (22) aufweist.

5. Vorrichtung nach Anspruche 4, **dadurch gekennzeichnet, dass** die Vorrichtung (10) eine Stickoxidzuführung aufweist.

6. Vorrichtung nach Anspruche 4, **dadurch gekennzeichnet, dass** die Vorrichtung (10) Elektroden (24) zur Erzeugung eines Lichtbogens aufweist.

7. Vorrichtung nach einem der Ansprüche 4 bis 6, **dadurch gekennzeichnet, dass** die Vorrichtung (10) ein Ozonfilter (28) aufweist, das in einem Auslassbereich des Reaktionsraums (12) angeordnet ist.
